# EUROPEAN PATENT SPECIFICATION

(11) **EP 1 866 683 B1**
(45) Date of publication and mention of the grant of the patent: **23.01.2013**
(21) Application number: 06726582.7
(22) Date of filing: 30.03.2006
(51) Int. Cl.: G02B 6/138, G02F 1/21, G02B 6/136, G02F 1/00, G02B 6/124

(54) **A TUNABLE FILTER DEVICE COMPRISING A WAVEGUIDE CONTAINING A BRAGG GRATING, AND A PLANER SUBSTRATE**
ABSTIMMBARE FILTEREINRICHTUNG MIT EINEM EIN BRAGG-GITTER ENTHALTENDEN WELLENLEITER UND PLANER-SUBSTRAT
DISPOSITIF A FILTRE ACCORDABLE AVEC GUIDE D'ONDE CONTENANT UN RESEAU DE BRAGG ET UN SUBSTRAT PLAN

(30) Priority: 06.04.2005 GB 0507012
(43) Date of publication of application: 19.12.2007
(73) Proprietor: THE UNIVERSITY OF SOUTHAMPTON, Southampton SO17 1BJ (GB)
(72) Inventor: SPARROW, Ian James Grayston, Cambridge CB2 4DW (GB); SMITH, Peter George Robin, Romsey Hampshire SO51 7WB (GB); EMMERSON, Gregory Daniel, Alton Hampshire GU34 4AN (GB); KACZMAREK, Malgorzata, Southampton SO15 7NX (GB); DYADYUSHA, Andriy Heorhiyovych, Southamp SO16 3DZ (GB)
(74) Representative: Jones, Graham Henry
(86) International application number: PCT/GB2006/001176
(87) International publication number: WO 2006/106305

(56) References cited:
- WO-A-2005/050306
- US-A1- 2001 031 122
- US-B1- 6 727 968
- SIRLETO L ET AL: "Optoelectronic switch and continuously tunable filter based on a liquid crystal waveguide" PROCEEDINGS OF THE SPIE, SPIE, BELLINGHAM, VA, US, vol. 4277, 23 January 2001 (2001-01-23), pages 320-327, XP009018027 ISSN: 0277-786X

## Description

This invention relates to a tunable filter device, and, more especially, this invention relates to a tunable filter device comprising a waveguide, containing a Bragg grating, and a planar substrate. This invention also relates to a method of manufacturing the tunable filter device.

A tunable filter device comprising a waveguide, a Bragg grating, and a planar substrate is known from L. Sirleto, G. Coppola, G. Abbate, G.C. Righini and J.M. Ot6n: "Electro-optical switch and continuously tunable filter based on a Bragg grating in a planar waveguide with a liquid crystal overlayer", Opt. Eng., 41(11), pp 2890-2898, 2002. This known tunable filter device uses a relief Bragg grating with the liquid crystal. This tunable filter device has surfaces in different planes which makes director orientation difficult. The director orientation is the average orientation of the molecules of the liquid crystal. The refractive index of the liquid crystal is determined by the director.

It is an aim of the present invention to reduce the above mentioned problem.

Accordingly, the present invention provides a tunable filter device comprising a waveguide containing a Bragg grating, and a planar substrate, the planar substrate comprising a core, a first cladding on a first side of the core, and a second cladding on a second side of the core, the waveguide containing the Bragg grating being positioned in the core, and the tunable filter device being characterised in that the planar substrate is such that a part only of the first cladding has been removed by etching and replaced with a liquid crystal, the waveguide containing the Bragg grating is ultraviolet light written, the remaining part of the first cladding has a surface which is smooth, flat and uniform due to the waveguide containing the Bragg grating being ultraviolet light written, and the remaining part of the first cladding that is covered by the liquid crystal is thin enough to allow penetration of the optical mode of the waveguide into the liquid crystal and forms an overlayer to planarise the surface of the tunable filter device so that the liquid crystal is in contact with the smooth, flat and uniform surface of the first cladding whereby director orientation of the liquid crystal is uniform, controlled and controllable.

In use of the tunable filter device, the first cladding will usually be an over cladding. The liquid crystal enables the refractive index of the first cladding to be altered. Changes in the refractive index of the first cladding alter the effective index of the planar substrate and therefore cause changes in the wavelength of the Bragg grating. The refractive index of the liquid crystal is determined by the average orientation of the molecules of the liquid crystal, this being referred to as the director. Control of the director orientation enables control of the refractive index. The refractive index variation can be measured as a shift in the wavelength of the Bragg grating. The smooth, flat and uniform surface of the first cladding means that the surface is fully planarised. The waveguide containing the Bragg grating may be positioned in the core within a region of higher refractive index that provides optical waveguiding.

Preferably, the tunable filter device is one in which the surface of the first cladding has a layer of a surfactant, and in which the layer of the surfactant extends between the channel waveguide containing the Bragg grating and the liquid crystal. Usually, the surfactant will be a very thin layer where it is between the channel waveguide containing the Bragg grating and the liquid crystal. The surfactant helps to control the director orientation at the surface of the waveguide. The provision of the surfactant after the removal of the part of the first cladding is more effective when the waveguide and the Bragg grating are ultraviolet light written as in the present invention, than would be the case with the above mentioned known tunable filter.

Preferably, the liquid crystal is a nematic liquid crystal. A presently preferred nematic liquid crystal is a Merck 18523 liquid crystal but other types of nematic liquid crystals may be employed. Liquid crystals other than nematic liquid crystals may also be employed, for example ferroelectic liquid crystals or smectic liquid crystals.

The tunable filter device preferably includes a first electrode and a second electrode, the first and second electrodes being spaced apart from each other, and the first and second electrodes being such as to render the tunable filter device electrically tunable. The electrically tunable filter device is easily controlled using an applied voltage. The use of voltage control is advantageous in that the voltage control is easy to operate, and it uses very low power. If desired, in an alternative embodiment of the invention, the tunable filter device may be tuned thermally.

Preferably, the first and second electrodes extend over an outer surface of the first cladding and under the liquid crystal. The first and second electrodes are then in the plane of the planar substrate. The first and second electrodes may form a pre-assembly electrode structure. The pre-assembly electrode structure may then subsequently be provided on the smooth, flat and uniform, preferably surfactant-treated, surface of the first cladding. If desired, the first and second electrodes may alternatively be positioned above and below the Bragg grating.

Preferably, the first and second electrodes are aluminium electrodes. Other electrically conducting materials may be employed.

The first and second electrodes may be spaced apart by a spacing of 0.25mm. This spacing is an approximate spacing and other spacings may be employed.

The first cladding is preferably a doped silica cladding. The second cladding is preferably a doped silica cladding. Other materials for the first and the second cladding may be employed. Conventional dopants include Boron, Phosphorous and Germanium, where Germanium is especially useful as a photosensitiser. Other dopants may also be added.

The etching is preferably etching with a hydrofluoric acid etch. Other etching liquids may be employed. The etching may be effected by means other than a liquid etch. Thus, for example, gas phase etching such as reactive ion etching may be employed. The etching is employed to provide a smoother less-structured exposed surface and thereby to reduce anchoring effects that limit the range of the director re-orientation.

The part of the first cladding that is replaced with the liquid crystal may be such that, the portion remaining after etching is prepared using a surfactant. The use of the surfactant is to induce homeotropic alignment of the director, and to assist in providing a uniform zero field director.

The tunable filter device may include a surfactant-treated overlayer over the liquid crystal. This surfactant-treated overlayer may reduce liquid crystal-air surface effects to help to control repeatability, to maximise tunability, and to protect against variations in ambient conditions, for example air currents. The surfactant-treated overlayer may advantageously induce homogeneous alignment or homeotropic alignment.

The tunable filter device may include an optical circulator at an input of the tunable filter device. Light at the Bragg wavelength may then be reflected to the circulator output. Light at other wavelengths is able to be transmitted through the tunable filter device. When the tunable filter device includes the first and second electrodes, changing the voltage applied to the liquid crystal shifts the Bragg wavelength, and thus changes the reflected and transmitted signals.

The present invention also provides a method of manufacturing the tunable filter device of the present invention, which method comprises providing a waveguide containing a Bragg grating, and a planar substrate, the planar substrate comprising a core, a first cladding on a first side of the core, and a second cladding on a second side of the core, and the waveguide containing the Bragg grating being positioned in the core, and replacing a part of the first cladding with a liquid crystal, characterised in that the waveguide containing the Bragg grating is ultraviolet light written, whereby the first cladding has a surface which is smooth, flat and uniform due to the waveguide containing the Bragg grating being ultraviolet light written, and the remaining part of the first cladding that is covered by the liquid crystal is thin enough to allow penetration of the optical mode of the waveguide into the liquid crystal and forms an overlayer to planarise the surface of the tunable filter device so that the liquid crystal is in contact with the smooth, flat and uniform surface of the first cladding whereby director orientation of the liquid crystal is uniform, controlled and controllable.

A method for writing a channel containing a Bragg grating by ultraviolet writing is taught by the paper by G.D. Emmerson, S.P. Watts, C.B.E. Gawith, V. Albanis, M. Ibsen, R.B. Williams, P.G.R. Smith, "Fabrication of directly UV-written channel waveguides with simultaneously defined integral Bragg gratings" Electronics Letters 2002 Vol. 38(24)pp 1531-2.

The method of the present invention may include providing the surface of the first cladding with a layer of a surfactant, the layer of the surfactant being such that it extends between the Bragg grating and the liquid crystal.

The method of the present invention may be such as to provide the tunable filter device with the parts and components mentioned above.

Embodiments of the invention will now be described solely by way of example and with reference to the accompanying drawings in which:
Figure 1 is a section through a first tunable filter device of the present invention;
Figure 2 is a perspective view of part of the tunable filter device shown in Figure 1 and illustrates in more detail a Bragg grating containing a channel waveguide used in the tunable filter device;
Figure 3 is a graph showing optical measurements taken to determine the Bragg wavelength from reflection spectra recorded at various applied voltages;
Figure 4 shows applied voltages to a tunable filter device;
Figure 5 is a simplified section through a second tunable filter device of the present invention; and
Figure 6 is a simplified section through a known tunable filter device.

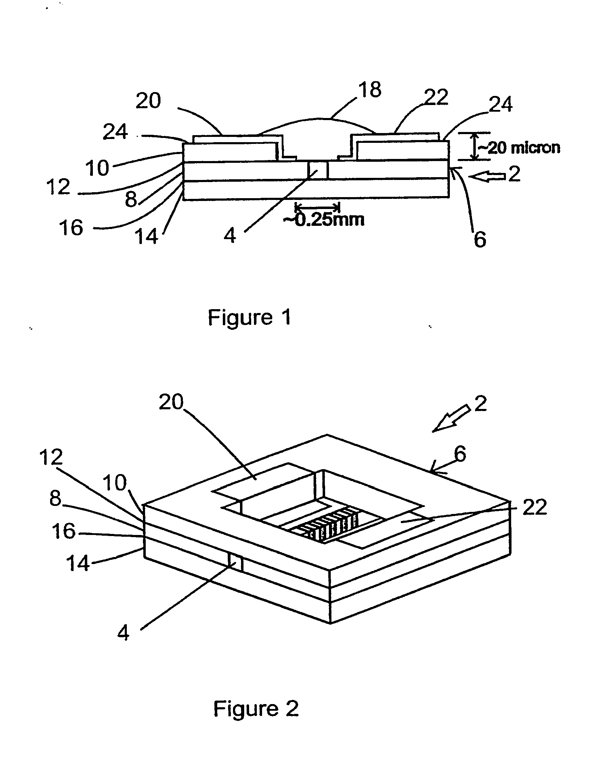

Referring to Figures 1 and 2, there is shown a tunable filter device 2 comprising a waveguide containing a Bragg grating 4 in a planar substrate 6. The planar substrate 6 comprises a core 8, a first cladding 10 on a first side 12 of the core 8, and a second cladding 14 on a second side 16 of the core 8. The waveguide containing the Bragg grating 4 is positioned in the core 8. The planar substrate 6 is such that a part of the first cladding 10 is removed and is replaced by a liquid crystal 18.

The tunable filter device 2 is such that the waveguide containing the Bragg grating 4 is ultraviolet light written. The first cladding 10 has a surface which is smooth, flat and uniform due to the waveguide containing the Bragg grating 4 being ultraviolet light written. The liquid crystal 18 is in contact with the smooth, flat and uniform surface of the first cladding 10, whereby director orientation of the liquid crystal 18 is uniform, controlled and controllable.

The liquid crystal 18 is a nematic liquid crystal. The liquid crystal 18 is a Merck 18523 liquid crystal 18.

The tunable filter device 2 includes a first electrode 20 and a second electrode 22. The first and second electrodes 20, 22 are spaced apart from each other as shown in Figure 1. The first and second electrodes 20, 22 are such as to render the tunable filter device electrically tunable. The electric tuning is simply done, and it consumes very little power.

The first and second electrodes 20, 22 extend over an outer surface 24 of the first cladding 10. The first and second electrodes 20, 22 also extend under the liquid crystal 18. The first and second electrodes 20, 22 are aluminum electrodes which are spaced apart by a spacing of approximately 0.25mm.

The first cladding 10 is a silica cladding. The second cladding 14 is also a silica cladding. The part of the first cladding 10 that is replaced with the liquid crystal 18 is such that it has been removed by etching with a hydrofluoric acid etch. This etch process provides a smoother less-structured exposed surface, and thereby reduces anchoring effects that limit the range of director re-orientation. After removal by etching, a remaining part of the first cladding 10 that is covered with the liquid crystal 18 is prepared using a surfactant. Any suitable and appropriate surfactant may be employed. The surfactant is employed to induce homeotropic alignment of the director, and to assist in providing a uniform zero-field director.

For the tunable device to be effective it is necessary that the optical mode of the waveguide containing the Bragg grating penetrates into the liquid crystal. The penetration of an optical mode will typically range from sub-micron to sub 10 microns. Thus any remaining portion of the first cladding must be thin enough to allow such penetration.

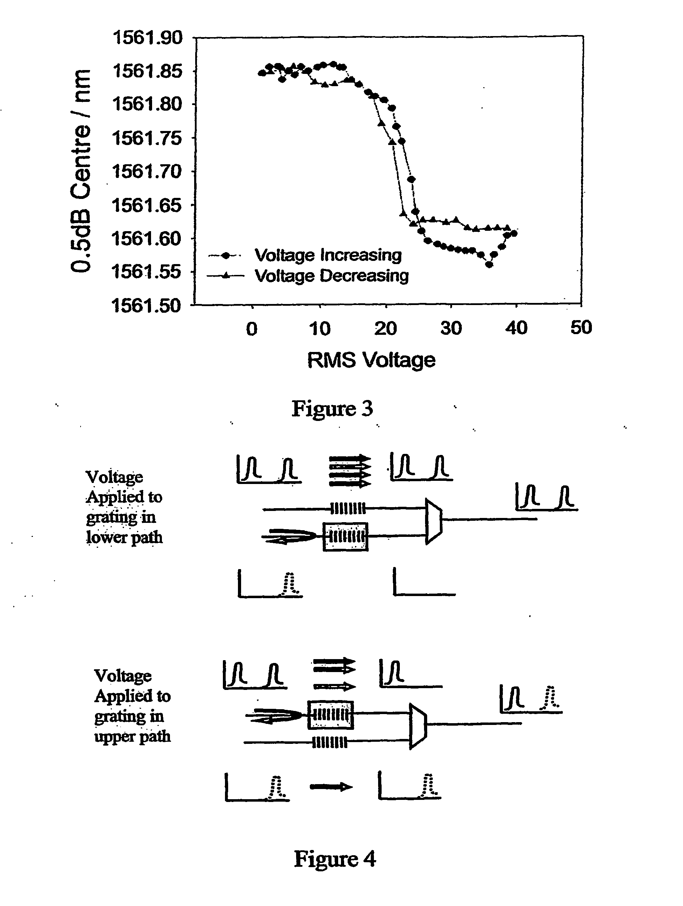

Referring now to Figure 3, there are shown optical measurements taken to determine the wavelength of the Bragg grating 4 from reflection spectra recorded at various applied voltages. A tuning range of just under 0.3nm, corresponding to 35GHz at 1550nm is achieved using a maximum of 40V RMS. At approximately 13 volts, a clear threshold effect can be seen. Below this value, very little variation of centre wavelength occurs with increasing voltage. Between 13-25 volts, there is a sharp drop in the centre wavelength, corresponding to a reduction in the liquid crystal refractive index.

Referring now to Figure 4, there are shown applied voltages to the tunable filter device 2 when employed as an add-drop device. In the add-drop device, the Bragg response was designed to be between optical channels when no field was applied. Thus the upper optical path as shown in Figure 4 transmits all wavelengths. On applying a voltage via the first and second electrodes 20, 22, the Bragg resonance became in-band with the add-drop channel. The solid channel shown in Figure 4 is filtered out, and it is replaced with the dotted channel shown in Figure 4. Figure 4 illustrates the potential application of the tunable filter device 2 as a reconfigurable add-drop multiplexer. The zero-field Bragg wavelength can be chosen to be between telecommunications channels. Applying a voltage, tunes the grating to be in-band. In this way, a particular wavelength can be rejected or transmitted. Multiple gratings and input paths can be used to provide more flexibility than the two input device shown in Figure 4.

The tunable filter device 2 shown in Figures 1 and 2 is preferably produced using preferred parameter ranges set out in the following Table.

**TABLE**

| | |
|---|---|
| Planar over/Undercladding thickness : | 20 microns |
| Overcladding thickness over Bragg grating : | < 500mm |
| Waveguide core/cladding refractive index difference : | 10⁻³ |
| Waveguide core diameter : | 6 microns |
| Waveguide operation : | Single mode |
| Waveguide core refractive index : | -1.47 |
| LC refractive index : | 1.4699(nₑ). 1.4400 (no) |
| Bragg grating length **:** | ~10mm |
| ragg Wavelength : | 1550nm |
| Electrode thickness : | >300nm (in plane electrodes) ~1mm (electrodes above/below waveguide plane) |
| Electrode material : | Suitable for wire bonding or soldering (eg Au) (in plane |
| | electrodes) ITO (electrodes above/below waveguide plane) |
| Bragg grating bandwidth : | Depends on application |
| Drive voltage : | 5 volts RMS |
| Drive frequency : | 250 Hz |

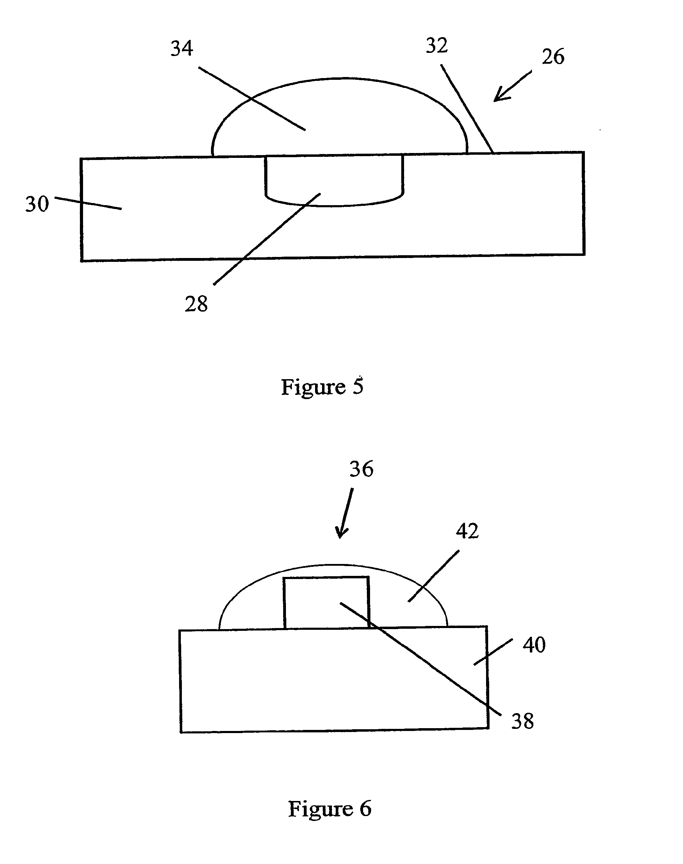

Referring now to Figure 5, there is shown a tunable filter device 26 comprising a waveguide core containing a Bragg grating shown collectively as waveguide/grating core 28. The tunable filter device 26 also comprises a substrate 30, a planarised surfactant-treated surface layer 32 and a liquid crystal 34. The tunable filter device 26 is such that the waveguide core containing the grating 28 is defined/written by ultraviolet light which means that the surface of the substrate 30 that receives the planarised, surfactant/treated surface layer 32 is able to be fully planarised, i.e. smooth, flat and uniform. This in turn means that the liquid crystal 34 is able to be in contact with a smooth, flat and uniform surface whereby director orientation of the liquid crystal is uniform, controlled and controllable.

Figure 6 illustrates a known tunable filter device 36 of the type mentioned in the above Article in *Opt. Eng, 41*. The tunable filter device 36 is a combined waveguide and grating core 38, a substrate 40 and a liquid crystal 42. The tunable filter device 36 uses a relief Bragg grating with the liquid crystal 42. The tunable filter device 36 is far from planarised. The tunable filter device 36 has surfaces in different planes, which makes director orientation difficult, and significantly more difficult than would be the case with the comparable tunable filter device 26 shown in Figure 5.

It is to be appreciated that the embodiments of the invention described above with reference to the accompanying drawings have been given by way of example only that modifications may be effected. Thus, for example, after the etching with the hydrofluoric acid etch or by other means, the part of the first cladding remaining that will be covered by the liquid crystal may be prepared used a surfactant. Also, the tunable filter device may include an overlayer to planarise the surface of the tunable filter device and/or a surfactant treated overlayer over the liquid crystal 18. An optical circulator may be provided at an input to the tunable filter device.

## Claims

1. A tunable filter device (2) comprising a waveguide containing a Bragg grating (4), and a planar substrate (6), the planar substrate (6) comprising a core (8), a first cladding (10) on a first side (12) of the core (8), and a second cladding (14) on a second side (16) of the core (8), the waveguide containing the Bragg grating (4) being positioned in the core (8), and the tunable filter device (2) being **characterised in that** the planar substrate (6) is such that a part only of the first cladding (10) has been removed by etching and replaced with a liquid crystal (18), the waveguide containing the Bragg grating (4) is ultraviolet light written, the remaining part of the first cladding (10) has a surface which is smooth, flat and uniform due to the waveguide containing the Bragg grating (4) being ultraviolet light written, and the remaining part of the first cladding (10) that is covered by the liquid crystal (18) is thin enough to allow penetration of the optical mode of the waveguide into the liquid crystal (18) and forms an overlayer to planarise the surface of the tunable filter device (2) so that the liquid crystal (18) is in contact with the smooth, flat and uniform surface of the first cladding (10) whereby director orientation of the liquid crystal (18) is uniform, controlled and controllable.

2. A tunable filter device (2) according to claim 1 in which the surface of the first cladding (10) has a layer of a surfactant, and in which the layer of the surfactant extends between the Bragg grating (4) and the liquid crystal (18).

3. A tunable filter device (2) according to claim 1 or claim 2 in which the waveguide containing the Bragg grating (4) is single-moded at the wavelength of filter operation.

4. A tunable filter device (2) according to any one of the preceding claims in which the liquid crystal (18) is a nematic liquid crystal.

5. A tunable filter device (2) according to any one of the preceding claims and including a first electrode (20) and a second electrode (22), the first and second electrodes (20, 22) being spaced apart from each other, and the first and second electrodes (20, 22) being such as to render the tunable filter device (2) electrically tunable.

6. A tunable filter device (2) according to claim 5 in which the first and second electrodes (20, 22) extend over an outer surface (24) of the first cladding (10) and under the liquid crystal (18).

7. A tunable filter device (2) according to claim 5 or claim 6 in which the first and second electrodes (20, 22) form a pre-assembly electrode structure.

8. A tunable filter device (2) according to claim 5 in which the first and second electrodes (20, 22) are positioned above and below the Bragg grating (4).

9. A tunable filter device (2) according to any one of claims 5 - 8 in which the first and second electrodes (20, 22) are aluminium electrodes.

10. A tunable filter device (2) according to any one of claims 5 - 9 in which the first and second electrodes (20, 22) are spaced apart by a spacing of 0.25mm.

11. A tunable filter device (2) according to any one of the preceding claims in which the first cladding (10) is a doped silica cladding.

12. A tunable filter device (2) according to any one of the preceding claims in which the second cladding (14) is a doped silica cladding.

13. A tunable filter device (2) according to any one of the preceding claims in which the etching is etching with a hydrofluoric acid etch.

14. A tunable filter device (2) according to any one of claims 1 - 12 in which the etching is by reactive ion etching.

15. A tunable filter device (2) according to any one of the preceding claims and including a surfactant-treated overlayer over the liquid crystal (18).

16. A tunable filter device (2) according to any one of the preceding claims and including an optical circulator at an input of the tunable filter device (2).

17. A method of manufacturing a tunable filter device (2) according to any one of the preceding claims, which method comprises providing a waveguide containing a Bragg grating (4), and a planar substrate (6), the planar substrate (6) comprising a core (8), a first cladding (10) on a first side (12) of the core (8), and a second cladding (14) on a second side (16) of the core (8), and the waveguide containing the Bragg grating (4) being positioned in the core (8), and replacing a part of the first cladding (10) with a liquid crystal (18), **characterised in that** the waveguide containing the Bragg grating (4) is ultraviolet light written, whereby the first cladding (10) has a surface which is smooth, flat and uniform due to the waveguide containing the Bragg grating (4) being ultraviolet light written, and the remaining part of the first cladding (10) that is covered by the liquid crystal (18) is thin enough to allow penetration of the optical mode of the waveguide into the liquid crystal (18) and forms an overlayer to planarise the surface of the tunable filter device (2) so that the liquid crystal (18) is in contact with the smooth, flat and uniform surface of the first cladding (10) whereby director orientation of the liquid crystal (18) is uniform, controlled and controllable.

18. A method according to claim 17 and including providing the surface of the first cladding (10) with a layer of a surfactant, the layer of the surfactant being such that it extends between the Bragg grating (4) and the liquid crystal (18).

## Patentansprüche

1. Abstimmbare Filtervorrichtung (2), die einen Wellenleiter, der ein Bragg-Gitter (4) enthält, und ein planares Substrat (6) umfasst, wobei das planare Substrat (6) einen Kern (8), eine erste Plattierung (10) auf einer ersten Seite (12) des Kerns (8) und eine zweite Plattierung (14) auf einer zweiten Seite (16) des Kerns (8) umfasst, wobei der Wellenleiter das Bragg-Gitter (4) enthält, das in dem Kern (8) angeordnet ist, und die abstimmbare Filtervorrichtung (2) **dadurch gekennzeichnet ist, dass** das planare Substrat (6) dergestalt ausgebildet ist, dass ein Teil nur der ersten Plattierung (10) durch Ätzen entfernt und durch einen Flüssigkristall (18) ersetzt wurde, der Wellenleiter, der das Bragg-Gitter (4) enthält, mit ultraviolettem Licht geschrieben ist, der übrige Teil der ersten Plattierung (10) eine Oberfläche aufweist, die glatt, flach und gleichmäßig ist, weil der Wellenleiter, der das Bragg-Gitter (4) enthält, mit ultraviolettem Licht geschrieben ist, und der übrige Teil der ersten Plattierung (10), der mit dem Flüssigkristall (18) bedeckt ist, dünn genug ist, um das Eindringen des optischen Modus des Wellenleiters in den Flüssigkristall (18) zu erlauben, und einen Überzug bildet, um die Oberfläche der abstimmbaren Filtervorrichtung (2) zu planarisieren, so dass der Flüssigkristall (18) in Kontakt mit der glatten, flachen und gleichmäßigen Oberfläche der ersten Plattierung (10) steht, wodurch die Direktorausrichtung des Flüssigkristalls (18) gleichmäßig, gesteuert und steuerbar ist.

2. Abstimmbare Filtervorrichtung (2) nach Anspruch 1, wobei die Oberfläche der ersten Plattierung (10) eine Schicht einer grenzflächenaktiven Substanz aufweist, und wobei sich die Schicht der grenzflächenaktiven Substanz zwischen dem Bragg-Gitter (4) und dem Flüssigkristall (18) erstreckt.

3. Abstimmbare Filtervorrichtung (2) nach Anspruch 1 oder Anspruch 2, wobei der Wellenleiter, der das Bragg-Gitter (4) enthält, bei der Wellenlänge des Filterbetriebes einen Einzelmodus aufweist.

4. Abstimmbare Filtervorrichtung (2) nach einem der vorangehenden Ansprüche, wobei der Flüssigkristall (18) ein nematischer Flüssigkristall ist.

5. Abstimmbare Filtervorrichtung (2) nach einem der vorangehenden Ansprüche, und die eine erste Elektrode (20) und eine zweite Elektrode (22) enthält, wobei die erste und die zweite Elektrode (20, 22) voneinander beabstandet sind, und die erste und die zweite Elektrode (20, 22) so ausgebildet sind, dass sie eine elektrische Abstimmung der abstimmbaren Filtervorrichtung (2) ermöglichen.

6. Abstimmbare Filtervorrichtung (2) nach Anspruch 5, wobei sich die erste und die zweite Elektrode (20, 22) über eine Außenfläche (24) der ersten Plattierung (10) und unter dem Flüssigkristall (18) erstrecken.

7. Abstimmbare Filtervorrichtung (2) nach Anspruch 5 oder Anspruch 6, wobei die erste und die zweite Elektrode (20, 22) eine Vormontage-Elektrodenstruktur bilden.

8. Abstimmbare Filtervorrichtung (2) nach Anspruch 5, wobei die erste und die zweite Elektrode (20, 22) oberhalb und unterhalb des Bragg-Gitters (4) angeordnet sind.

9. Abstimmbare Filtervorrichtung (2) nach einem der Ansprüche 5 - 8, wobei die erste und die zweite Elektrode (20, 22) Aluminiumelektroden sind.

10. Abstimmbare Filtervorrichtung (2) nach einem der Ansprüche 5 - 9, wobei die erste und die zweite Elektrode (20, 22) um eine Distanz von 0,25 mm voneinander beabstandet sind.

11. Abstimmbare Filtervorrichtung (2) nach einem der vorangehenden Ansprüche, wobei die erste Plattierung (10) eine dotierte Siliciumdioxidplattierung ist.

12. Abstimmbare Filtervorrichtung (2) nach einem der vorangehenden Ansprüche, wobei die zweite Plattierung (14) eine dotierte Siliciumdioxidplattierung ist.

13. Abstimmbare Filtervorrichtung (2) nach einem der vorangehenden Ansprüche, wobei das Ätzen ein Ätzen mit einem Fluorwasserstoffsäure-Ätzmittel ist.

14. Abstimmbare Filtervorrichtung (2) nach einem der Ansprüche 1 - 12, wobei das Ätzen mittels reaktivem Ionen-Ätzen erfolgt.

15. Abstimmbare Filtervorrichtung (2) nach einem der vorangehenden Ansprüche, und die einen mit einer grenzflächenaktiven Substanz behandelten Überzug über dem Flüssigkristall (18) enthält.

16. Abstimmbare Filtervorrichtung (2) nach einem der vorangehenden Ansprüche, und die einen optischen Zirkulator an einem Eingang der abstimmbaren Filtervorrichtung (2) enthält.

17. Verfahren zur Herstellung einer abstimmbaren Filtervorrichtung (2) nach einem der vorangehenden Ansprüche, wobei das Verfahren Folgendes umfasst: Bereitstellen eines Wellenleiters, der ein Bragg-Gitter (4) enthält, und eines planaren Substrats (6), wobei das planare Substrat (6) einen Kern (8), eine erste Plattierung (10) auf einer ersten Seite (12) des Kerns (8) und eine zweite Plattierung (14) auf einer zweiten Seite (16) des Kerns (8) umfasst, und der Wellenleiter, der das Bragg-Gitter (4) enthält, in dem Kern (8) angeordnet ist; und Ersetzen eines Teils der ersten Plattierung (10) durch einen Flüssigkristall (18), **dadurch gekennzeichnet, dass** der Wellenleiter, der das Bragg-Gitter (4) enthält, mit ultraviolettem Licht geschrieben ist, wodurch die erste Plattierung (10) eine Oberfläche aufweist, die glatt, flach und gleichmäßig ist, weil der Wellenleiter, der das Bragg-Gitter (4) enthält, mit ultraviolettem Licht geschrieben ist, und der übrige Teil der ersten Plattierung (10), der mit dem Flüssigkristall (18) bedeckt ist, dünn genug ist, um das Eindringen des optischen Modus des Wellenleiters in den Flüssigkristall (18) zu erlauben, und einen Überzug bildet, um die Oberfläche der abstimmbaren Filtervorrichtung (2) zu planarisieren, so dass der Flüssigkristall (18) in Kontakt mit der glatten, flachen und gleichmäßigen Oberfläche der ersten Plattierung (10) steht, wodurch die Direktorausrichtung des Flüssigkristalls (18) gleichmäßig, gesteuert und steuerbar ist.

18. Verfahren nach Anspruch 17, und welches das Überziehen der Oberfläche der ersten Plattierung (10) mit einer Schicht einer grenzflächenaktiven Substanz enthält, wobei die Schicht der grenzflächenaktiven Substanz dergestalt ausgebildet wird, dass sie sich zwischen dem Bragg-Gitter (4) und dem Flüssigkristall (18) erstreckt.

## Revendications

1. Dispositif à filtre accordable (2) comprenant un guide d'ondes contenant un réseau de Bragg (4), et un substrat plan (6), le substrat plan (6) comprenant un coeur (8), un premier revêtement (10) sur un premier côté (12) du coeur (8), et un deuxième revêtement (14) sur un deuxième côté (16) du coeur (8), le guide d'ondes contenant le réseau de Bragg (4) étant positionné dans le coeur (8), et le dispositif à filtre accordable (2) étant **caractérisé en ce que** le substrat plan (6) est tel qu'une partie seulement du premier revêtement (10) a été retirée par gravure et remplacée par un cristal liquide (18), le guide d'ondes contenant le réseau de Bragg (4) est écrit avec un rayonnement ultraviolet, la partie restante du premier revêtement (10) a une surface qui est lisse, plate et uniforme en raison de l'écriture du guide d'ondes contenant le réseau de Bragg (4) avec un rayonnement ultraviolet, et la partie restante du premier revêtement (10) qui est recouverte par le cristal liquide (18) est suffisamment mince pour permettre la pénétration du mode optique du guide d'ondes dans le cristal liquide (18) et forme une surcouche pour planariser la surface du dispositif à filtre accordable (2) de telle sorte que le cristal liquide (18) est en contact avec la surface lisse, plate et uniforme du premier revêtement (10), l'orientation directrice du cristal liquide (18) étant ainsi uniforme, contrôlée et contrôlable.

2. Dispositif à filtre accordable (2) selon la revendication 1 dans lequel la surface du premier revêtement (10) comporte une couche d'un tensioactif, et dans lequel la couche du tensioactif s'étend entre le réseau de Bragg (4) et le cristal liquide (18).

3. Dispositif à filtre accordable (2) selon la revendication 1 ou la revendication 2 dans lequel le guide d'ondes contenant le réseau de Bragg (4) est monomode à la longueur d'onde de fonctionnement du filtre.

4. Dispositif à filtre accordable (2) selon l'une quelconque des revendications précédentes dans lequel le cristal liquide (18) est un cristal liquide nématique.

5. Dispositif à filtre accordable (2) selon l'une quelconque des revendications précédentes et comprenant une première électrode (20) et une deuxième électrode (22), les première et deuxième électrodes (20, 22) étant espacées l'une de l'autre, et les première et deuxième électrodes (20, 22) étant telles qu'elles rendent le dispositif à filtre accordable (2) accordable électriquement.

6. Dispositif à filtre accordable (2) selon la revendication 5 dans lequel les première et deuxième électrodes (20, 22) s'étendent sur une surface externe (24) du premier revêtement (10) et sous le cristal liquide (18).

7. Dispositif à filtre accordable (2) selon la revendication 5 ou la revendication 6 dans lequel les première et deuxième électrodes (20, 22) forment une structure d'électrodes préassemblée.

8. Dispositif à filtre accordable (2) selon la revendication 5 dans lequel les première et deuxième électrodes (20, 22) sont positionnées au-dessus et en dessous du réseau de Bragg (4).

9. Dispositif à filtre accordable (2) selon l'une quelconque des revendications 5 à 8 dans lequel les première et deuxième électrodes (20, 22) sont des électrodes en aluminium.

10. Dispositif à filtre accordable (2) selon l'une quelconque des revendications 5 à 9 dans lequel les première et deuxième électrodes (20, 22) sont espacées par un espacement de 0,25 mm.

11. Dispositif à filtre accordable (2) selon l'une quelconque des revendications précédentes dans lequel le premier revêtement (10) est un revêtement en silice dopée.

12. Dispositif à filtre accordable (2) selon l'une quelconque des revendications précédentes dans lequel le deuxième revêtement (14) est un revêtement en silice dopée.

13. Dispositif à filtre accordable (2) selon l'une quelconque des revendications précédentes dans lequel la gravure est une gravure avec une attaque chimique à l'acide fluorhydrique.

14. Dispositif à filtre accordable (2) selon l'une quelconque des revendications 1 à 12 dans lequel la gravure se fait par gravure ionique réactive.

15. Dispositif à filtre accordable (2) selon l'une quelconque des revendications précédentes et comprenant une surcouche traitée avec un tensioactif par-dessus le cristal liquide (18).

16. Dispositif à filtre accordable (2) selon l'une quelconque des revendications précédentes et comprenant un circulateur optique et une entrée du dispositif à filtre accordable (2).

17. Procédé de fabrication d'un dispositif à filtre accordable (2) selon l'une quelconque des revendications précédentes, lequel procédé comprend l'obtention d'un guide d'ondes contenant un réseau de Bragg (4), et d'un substrat plan (6), le substrat plan (6) comprenant un coeur (8), un premier revêtement (10) sur un premier côté (12) du coeur (8), et un deuxième revêtement (14) sur un deuxième côté (16) du coeur (8), et le guide d'ondes contenant le réseau de Bragg (4) étant positionné dans le coeur (8), et le remplacement d'une partie du premier revêtement (10) par un cristal liquide (18), **caractérisé en ce que** le guide d'ondes contenant le réseau de Bragg (4) est écrit avec un rayonnement ultraviolet, le premier revêtement (10) ayant ainsi une surface qui est lisse, plate et uniforme en raison de l'écriture du guide d'ondes contenant le réseau de Bragg (4) avec un rayonnement ultraviolet, et la partie restante du premier revêtement (10) qui est recouverte par le cristal liquide (18) est suffisamment mince pour permettre la pénétration du mode optique du guide d'ondes dans le cristal liquide (18) et forme une surcouche pour planariser la surface du dispositif à filtre accordable (2) de telle sorte que le cristal liquide (18) est en contact avec la surface lisse, plate et uniforme du premier revêtement (10), l'orientation directrice du cristal liquide (18) étant ainsi uniforme, contrôlée et contrôlable.

18. Procédé selon la revendication 17 et comprenant l'application sur la surface du premier revêtement (10) d'une couche d'un tensioactif, la couche du tensioactif étant telle qu'elle s'étend entre le réseau de Bragg (4) et le cristal liquide (18).
